# EUROPEAN PATENT APPLICATION

(11) **EP 1 026 867 A2**
(43) Date of publication of application: **09.08.2000**
(21) Application number: 99310214.4
(22) Date of filing: 17.12.1999
(51) Int. Cl.: H04L 29/06

(54) **System and method to support configurable policies of services in directory-based networks**

(30) Priority: 22.12.1998 US 219284
(71) Applicant: NORTEL NETWORKS CORPORATION, Montreal, Quebec H2Y 3Y4 (CA)
(72) Inventor: Soncodi, Adrian, Kanata, Ontario K2K 2T2 (CA)
(74) Representative: Maury, Richard Philip

(57) **Abstract**

A directory-based network comprises user-callable network elements, at least one directory server, and at least one call/process server. The call/process server comprises several decoupled engines including a policy engine which upon system initialization or upon request retrieves a plurality of policy scripts from a directory server and constructs from them an adaptive context-sensitive policy tree. Upon user call to a network element requesting a service, an agent of the call/process server, which agent is located in the network element, forwards an admission request to the call/process server which executes policy tree in the context of the request and of the current state of the network as reflected in the directory server and in said several decoupled engines of the call/process server. An admission reply is returned to the network element, the contents of which are retained in service-specific control block in the network element and used to control the execution of the request. Policy scripts can easily be entered, deleted, or modified and a new policy tree built immediately.

## Description

### FIELD OF THE INVENTION

The invention pertains to communication networks, particularly to improving performance and flexibility of policy-driven directory-based communication networks.

### BACKGROUND OF THE INVENTION

### Definitions:

Services are capabilities supported by these connection-oriented or connectionless protocols: (e.g. voice, video, circuit emulation, data flows such as Internet Protocol (IP) etc.).

Features are enhancements to or variations to services, (e.g., call forwarding, call waiting, etc.).

Policies are rules that govern or modify the behavior of services, and may provide them with new capabilities (features) to the point that they can be considered new services.

The "service part" of a feature is the set of actions required to perform the feature, (e.g., to service a call, transfer the data, etc.). This includes signalling, translations, routing, as well as all the required network allocations.

The "policy part" of a feature is the set of rules to be evaluated and the subsequent decisions and actions to be performed responsive to the decisions made. The policy part determines such things as whether the feature should be performed (based on capabilities subscribed to by the user, and based on network resource availability), and the optimization among possible ways of performing actions.

Recent developments in networks have led to the advent of directory-based solutions, which attempt to provide large distributed database services with open interfaces. Such a network generally includes two or more interconnected servers, each provided with a "directory" of what information the other servers store. The term "active directory" is applied when a repertoire of functions is provided in conjunction with the directory data.

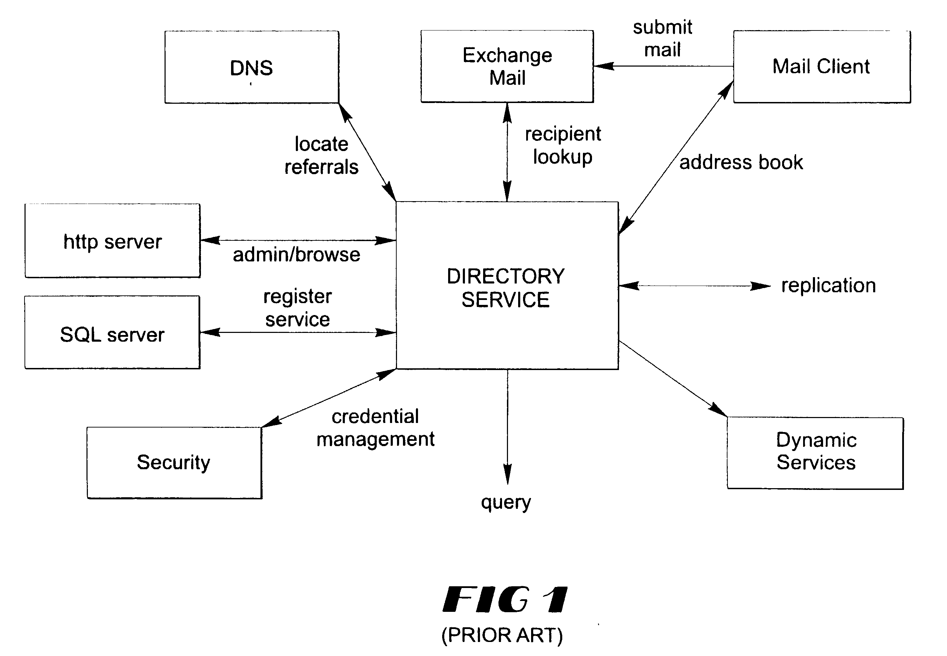

Fig. 1 depicts typical functionality of an active directory system, in which it is transparent to users logged on to a particular server that the Directory Service block may communicate with other servers over communication media.

Directory services are important for creating intelligent networks. A directory service is a physically distributed, logically centralized repository of data which is used to manage computer networks. A traditional directory service provides a way to locate and identify users and available resources in a distributed system.

Early attempts at networks had little intelligence, and merely provided basic connectivity (such as the "Plain Old Telephone Service" (POTS) voice networks). A small amount of intelligence was added to early networks, providing a few features with fixed implementations. Subscribers could simulate some features, particularly if subscribers are computer-assisted. For example, a subscriber could institute a redial feature, with it appearing to the network simply that the subscriber is placing many calls. However, such subscriber-initiated features are inherently limited. Fuller implementations of features require support from the network.

A concept of intelligent networks (IN) developed for voice networks. These INs offer many features, but still with fixed, inflexible implementations. These INs are mostly "call-server" type solutions, with the call server being the signalling control point (SCP) node in voice networks.

INs and SCPs generally offer standard or classical features, some standard protocols, and tend to be limited to proprietary implementations lacking in flexibility.

Modern data networks generally support large numbers of data protocols, services and combinations thereof, thus tending toward great complexity. However, additional challenges include providing wider range for bandwidth (BW) demands, differentiated traffic (connectionless & connection-oriented, real time (RT) and non-RT traffic), the need to ensure quality of service (QoS) for RT traffic, the need to offer differentiated service based on subscription level (e.g. premium, gold, etc.), assurance of authentication and security etc. Further challenges arise from dynamic routing in data networks, and the burgeoning number of addressing schemata in data networks.

A possible solution to some of these challenges could be achieved by signaling between the service end-points, i.e. extending the communication protocols adequately. However, this is inherently limited since the network elements lack global network perspective. Complex signaling also increases processing time, resulting in fewer calls/second and longer call set-up times. SCP-type solutions, originally evolved for voice networks, are well suited for voice-data networks.

Much of the current development in network technology is toward directory support and database support. SCPs and call servers (CSs) have some database support, e.g., for number translations. Such support is usually based on a proprietary implementation of DB engine by network vendors. However, network DB capabilities have typically been limited, and they are typically based on proprietary DB schema. They typically provide just enough user information or numbering plans or network topology information to support some translations or some 1-800 features in the voice world, but generally offer few features in the data world.

Emergent voice-data networks generally feature sophisticated user authentication leading to a proliferation of user IDs and passwords, large menus of subscriber options resulting in a large number of services and combinations, proliferation of addresses (including e-mail, telephone numbers, and information to support roaming among different locations), and a proliferation of information concerning various types of network elements, protocols and services/features supported.

More support information is required to enable networks to make more sophisticated and intelligent decisions. Both provider and carrier network owners have ended up with a great many isolated "support databases", which often contain redundant information (e.g. same user has profiles in many DBs).

There is need for integration and consolidation of these DBs to simplify administration and reduce costs, and to provide a more comprehensive, unified, and powerful support for complex features.

Work is being done in the area of active directories, notably by Microsoft, Netscape, and Novell. The active directory concept evolved from the X500 directory standard (ITU-T) discussed below.

There is great potential for such unified databases, often called "directories" rather than "databases" because they are not necessarily the DBs themselves, but may be the front-ends to actual DBs for the purpose of providing a unified view of the underlying DBs. The resulting robustness and performance of the current commercially available "directory solutions" has inspired network vendors to show renewed interest in CS-type solutions

Advantages of directory-based solutions include the use of Internet address space with Domain Naming Service (DNS), and web-based access and administration. Accessing the directory over IP, however, is not essential and other protocols may be used (e.g. Frame Relay).

While these solutions provide "generic DB" support, they set forth no application-specific schema.

### Database schemata (models):

### X500 from ITU-T

X500 includes a family of standards against which to model a "universal" (integrated) directory. Database objects include country, locality, organization, organizational unit, person and group, organized into a hierarchy and having standard attributes. X500 does not focus on network services, network elements or policies.

A number of current applications are based on X500, especially organization schemata and personnel records. X500 has a limited ability to support many applications, since one cannot add attributes to standardized objects.

Protocols have been developed to access or query X500 databases. These protocols include DAP (directory access protocol), and LDAP (lightweight DAP) standardized by IETF (Internet Engineering Task Force). LDAP is a simpler protocol than DAP to query X500-type directories. LDAP is IP based, and works in the Internet environment with DNS names and specific URLs

### CIM (Common Information model) from DMTF (Desktop Management Task Force)

CIM is an emerging standard which addresses the problem of administering and managing a large number of computers (i.e., PCs and workstations), keeping track of hardware (boxes, cards, peripherals, etc.) and software (installed applications, versions, compatibility, etc.).

The CIM standard enables modelling of a large number of objects, standardizing their names and sets of general-purpose attributes for them, as well as relationships among them. Conceptually, the range of objects that may be modelled is quite broad.

CIM's basic schema can be extended by adding specialized objects to "refine" base schema objects, and to add more attributes and relationships.

However, extensions to CIM are viewed as proprietary. Therefore it is not clear how a CIM implementation can be able to provide a generic model (i.e. one which would allow interoperability between different vendors).

The base schema is passive (i.e., does not define behavior). Therefore no solution is proposed for using the objects and attributes, and there is little enforcement of what is "standard".

CIM borrows concepts from X500 for users (persons), organizations, location and the like, but nothing in the area of network services and policies.

Additional shortcomings of conventional directory based networks are discussed in *Directory-enabled Networks,* Version 3.Oc5, Steven Judd and John Strassner, Microsoft White Papers, 1998, available on the Internet at http:\\murchiso.com\den, among other places. For example, in the last paragraph of page 1 it discloses:
...current directory services were built mainly to accommodate administrative needs.... The directory must be transformed from a 'dumb warehouse' to an authoritative, distributed, intelligent repository of information for services and applications.

### Under Section 1.1.1 on page 2:

Today's directory services were designed to provide central management of security and contact information in a network with a relatively small number of relatively large computers.... Application management has been addressed as an afterthought
Lack of integration and the sheer complexity of the tools themselves has become a barrier to the deployment of new applications as well as the exchange and sharing of data ... .
Administrators need a level of control over their networks that is currently unavailable.

### And in the first paragraph at the top of page 3:

Simply managing individual devices is no longer sufficient. Network administrators need to define and manage *policies* to control the network .... In general terms, policies define what resources a given consumer can use in the context of a given application or service. [Emphasis in original]

### DEN (Directory-Enabled Networks)

The work being done on DEN is modelling work, similar to and based on CIM, and extends the CIM schema in the areas of network elements and services, service and user profiles, and policies.

Comments from industry specialists registered in various Internet discussion groups suggest that the DEN schema is not implementable in its present state. DEN inherits the shortcomings of CIM, especially as a result of being only a passive schema with no behavior specified.

DEN specifies several types of profiles (for users, devices, services) but does not show or enforce how these should be related to X500 objects (e.g. persons) or CIM objects (e.g. services, devices). It similarly does not show or enforce the relations among policies. Further, DEN takes the restrictive approach of viewing policies merely as a sequence of conditions and actions with little or no provision for interactivity among policies or with network conditions.

For instance, the DEN standard allows partial implementations and proprietary extensions. Thus, DEN-based solutions tend to become arbitrary. In short, DEN establishes some context and lays down some foundation for naming, but does not set forth the complete solution to any problem.

The emerging need in networks is new services, features, and capabilities, especially for data and integrated voice/data networks. Traditionally, this is done by providing hard-coded implementations of features, where the "service" part, the "policy" part, the "authentication" part etc. are undistinguishable in an amorphous block, with perhaps a few tunable options. A better way to add services and features would be to provide highly flexible (interactive and individually configurable) policies.

Present implementations of policies tend to consist of precoded lists of the form
IF "A" APPLIES, DO "1"
IF "B" APPLIES, DO "2"
and so on, and are not amenable to dynamic context-sensitive adaptation, particularly in terms of variations in the execution path. Nor are they amenable to fast and easy modification. Modification presently requires a rewriting, recompilation, and replacement of the policy code.

There is thus a need for an improved policy-based call server to support services in a directory-based network.

It is an object of the present invention to provide an improved policy-based call server to support services in a directory-based network.

It is another object of the present invention to provide an improved policy-based call server to support services in a directory-based network. in which the distributed directory is an authoritative, distributed, intelligent repository of information for services and applications.

It is an additional object of the present invention to provide easy application management in a network with a relatively large number of computers.

It is a further object of the present invention to provide policy management that is easily reconfigurable and dynamically adaptive according to context.

These and other objects of the invention will become apparent to those skilled in the art from the following description thereof.

### SUMMARY OF THE INVENTION

In accordance with the teachings of the present invention, these and other objects may be accomplished by the present systems and methods of incorporating in the network a call server which upon network initialization or upon request constructs a hierarchical policy tree according to stored policy scripts, monitors network status, and interprets each user request according to the policy tree in the context of current network status. The policy scripts have the ability to selectively call one another. The policy scripts can easily be created, deleted, or modified and construction of a new policy tree requested accordingly. The present invention also includes control blocks in each network element for storing the results of policy interpretation for each application request and for controlling the execution of each application request.

The invention will next be described in connection with certain exemplary embodiments; however, it should be clear to those skilled in the art that various modifications, additions and subtractions can be made without departing from the spirit or scope of the claims.

### BRIEF DESCRIPTION OF THE DRAWINGS

The invention will be more clearly understood by reference to the following detailed description of an exemplary embodiment in conjunction with the accompanying drawings, in which:
Fig. 1 (Prior Art) illustrates a typical functionality of a directory-based network;
Fig. 2 illustrates a network according to the present invention;
Fig. 3 details interaction among elements depicted in Fig. 2;
Fig. 4 shows detail within the Call Server/Policy Manager (CS/PM) depicted in Fig 4;
Fig. 5 is an overview of policy evaluation;
Fig. 6 illustrates call policy parameter objects CObjIn; it is implicit that there is a corresponding set, CObjOut; and
Fig. 7 illustrates policy-based routing scenarios.

### DESCRIPTION OF THE INVENTION

The present invention is a directory-based, policy-powered distributed communications network. Policies are interpreted hierarchically and interactively. Individual policies may be updated as desired, i.e. without waiting for major software releases or complete software reloads.

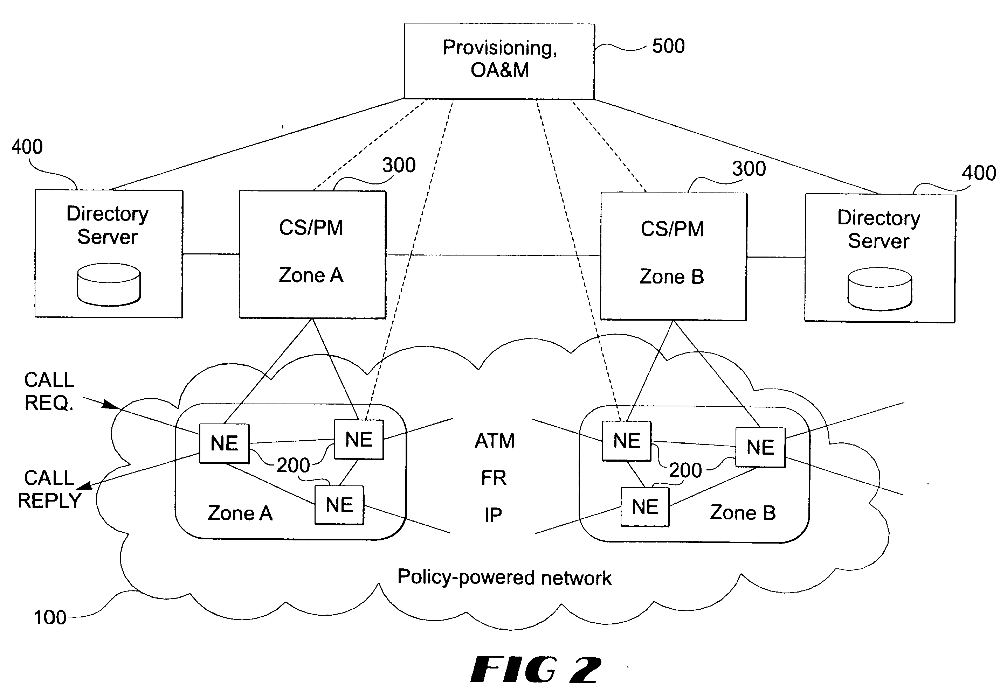

Fig. 2 depicts a network 100 operating according to the present invention. A plurality of network elements (NE's) 200 may communicate with one another using various communication protocols (e.g., Asynchronous Transfer Mode (ATM), Frame Relay (FR), Internet Protocol (IP), etc.). Users may make call requests into network elements 200, and receive call replies therefrom. Connectionless traffic may be supported as well.

The network elements 200 may be grouped into zones for administrative convenience and scalability. For each zone there is at least one call server/policy manager (CS/PM) 300 and at least one directory server 400. Replicated servers can be used for added reliability. In an embodiment of the invention, the network elements 200 and CS/PMs 300 communicate with the directory servers 400 in LDAP, although any suitable protocol may be used, such as the conventional DAP or SQL protocols. Such a protocol should have the ability to retrieve directory objects based on object type and filtered according to attribute names and values.

Communication between NE's 200 and the CS/PM's 300 may be by means of the conventional COPS, DIAMETER, IPDC, etc. protocols, as may communication among CS/PM's 300 and communication between CS/PM's 300. An Operation, Administration, and Maintenance (OAM) platform 500 is able to communicate with any of the network elements and servers and is used for provisioning, configuration, and the like in a protocol such as the conventional SNMP or CMIP protocols. The directory schema contains profile information allowing the components to determine which protocols to use for particular communication.

The present invention builds largely on the Call Server model, rather than implementing the flexible policy mechanism on each network element (with resultant replication of resources. The invention provides a Policy Manager (PM) as a centralized entity with the Call Server.

For small-scale networks, however, the invention does not preclude CS/PM 300 residing on the network elements 200 (e.g., there may be a card that supports this functionality in each network element). Several other cards may contain software modules implementing the service end-points. These modules are all clients of the CS/PM residing on the same network element 200.

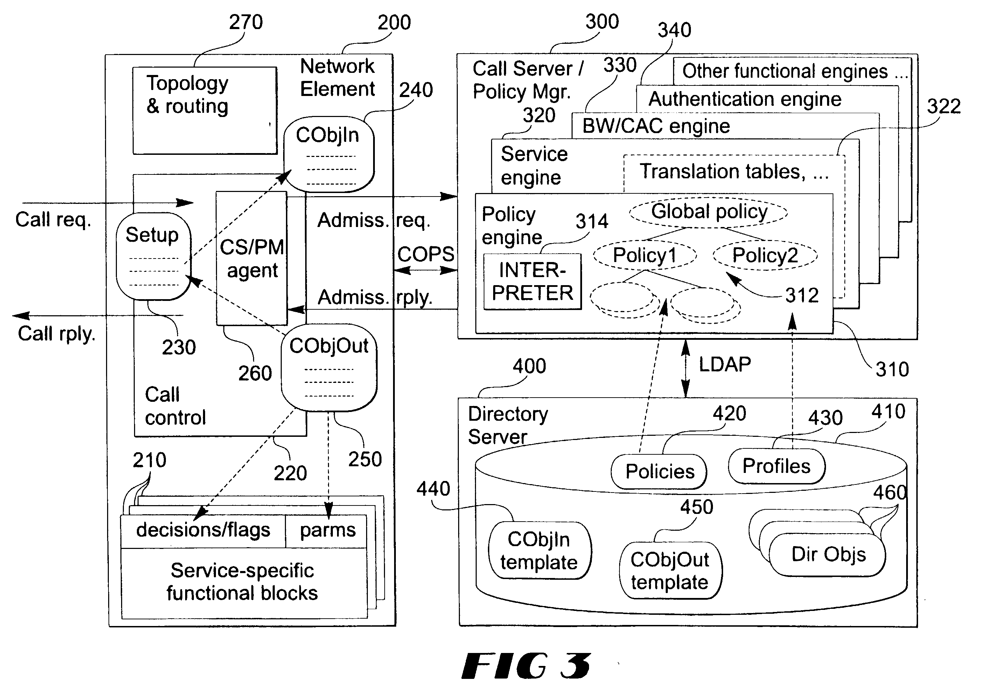

Fig. 3 shows further detail of the network elements 200, CS/PM's 300, and directory servers 400 and their interconnections/interactions.

### Service-specific functional blocks (SSFBs) 210:

SSFBs 210 are logical components residing on the NEs 200. They enable the NE 200 to apply policy decisions and they can also collect/provide information relevant to policies. SSFBs 210 are not necessarily discrete entities/modules, but can be distributed inside a larger software component of the NE 200. Or they can be implemented directly in hardware.

SSFBs 210 are controllable blocks, which can accept specific commands and input parameters. The parameters can be supplied either internally (i.e. under the control of NE software) or externally (via an external interface/protocol, e.g. SNMP).

Each SSFB 210 can be programmed to perform a specific low-level (related to the datapath) or high-level (application-specific) function.

Each SSFB 210 may have an internal state machine, in which case the commands need to be issued in a specific order, according to a predetermined protocol. Each SSFB 210 may also be programmed to send event notifications (from a predetermined specific set of events it can handle).

A block/function 210 can be common to more than one service. One policy can make use of one or more of these blocks 210, at various times, in a manner that is service- and policy-dependent

Blocks can be functionally classified into types. Each block type can be replicated (e.g. one component per port or per interface card).

The following is a list of possible block types for integrated voice-data networks (a single NE 200 does not necessarily contain all of them):
: traffic shaper
: traffic policer
: traffic queue(s) manager
: traffic counter
: bandwidth manager
: flow aggregator/separator
: packet/flow interceptor
: packet classifier
: packet marker/labeler
: packet filters: encapsulation/decapsulation
   : translation/interworking
   : compression/decompression
   : encryption/decryption
: voice /video stream encoder/decoder
: voice echo canceler
: voice silence suppressor
: digital signal processor (DSP): audio filtering,
   e.g. eliminate noise, audio gain control
: physical signaling controller: on/off hook signalling, dialtone, ring
: physical interface tester

Each block type defines a logical interface (commands, parameters and protocol). It is intended that these interfaces be compliant to emerging (future) standards. However, in the present invention these interfaces consist of a set of controls, (e.g., Enable/Disable Block) and a set of parameters that the CS/PM 300 or CS/PM agent 260 can set to trigger the service-specific functionality. These may be vendor-specific (e.g., the traffic policer block may request two parameters in the Generic Cell Rate Algorithm (GCRA), which is an accepted way to measure cell rates.

### Call control (CC) engine 220:

One or more CC's 220 is/are located on each NE or on an auxiliary processor communicating with the NE 200. The CC 220 performs signaling according to protocol stacks, call set-up/tear-down, and support for additional call features (service-specific). A CC 220 may make use of some or all of the SSFB's 210, and may implement local policies. A CC 220 works in conjunction with the policy engine 310 and the service engine 320 on the CS/PM 300.

Some CC's 220 may have reduced functionality, acting only as a signaling proxy. In such a case more service-related functionality may be provided on the CS/PM 300, where the service engine 320 may become a centralized CC engine.

### CS/PM agent 260:

One or more CS/PM agents 260 is/are located on the NE 200 or on an auxiliary processor communicating with the NE 200. An agent 260 intermediates between the CC engines 220, the SSFBs 210, and the CS/PM 300. It communicates with the CS/PM 300 via the policy protocol.

Agent 260 is responsible for issuing remote procedure calls to the CS/PM 300 to get policy decisions, and can also receive unsolicited policy decisions from the CS/PM 300. Agent 260 translates policy decisions and parameters into local actions for the CC engine 220 and SSFBs 210, therefore enabling generic policies to be applied on a specific NE 200. Policies can also instruct the agent 260 which events to signal to the CS/PM 300. The agent 260 then programs the SSFBs 210 to generate the appropriate notifications.

Agent 260 hides (from the CS/PM 300) the specific signaling protocol used, and also hides (from the CS/PM 300) the vendor-specific implementation of the SSFBs 210. This presents an "external" view of these SSFBs 210 to the CS/PM 300, thereby allowing policies to flexibly specify control actions for the NE 200 (policy primitives).

### Topology and routing engine 270:

One or more routing engines 270 may be located on the NE 200 or on an auxiliary processor communicating with the NE 200 for maintaining the NE 200's view of the network topology. Routing engine 270 may not be present at all, or may have limited capabilities for services using static routing.

The routing engine 270 implements the functionality required to determine the topology of its neighbors and to communicate topology to its neighbors. Routing engine 270 also supports the CC engines 220 in taking routing decisions, based on acquired network topology info:
: nodes and links
: their static attributes, e.g. costs, delays
: their dynamic attributes, e.g. available bandwidth, congestion status

### Policy Objects CObjIn 240 and CObjOut 250:

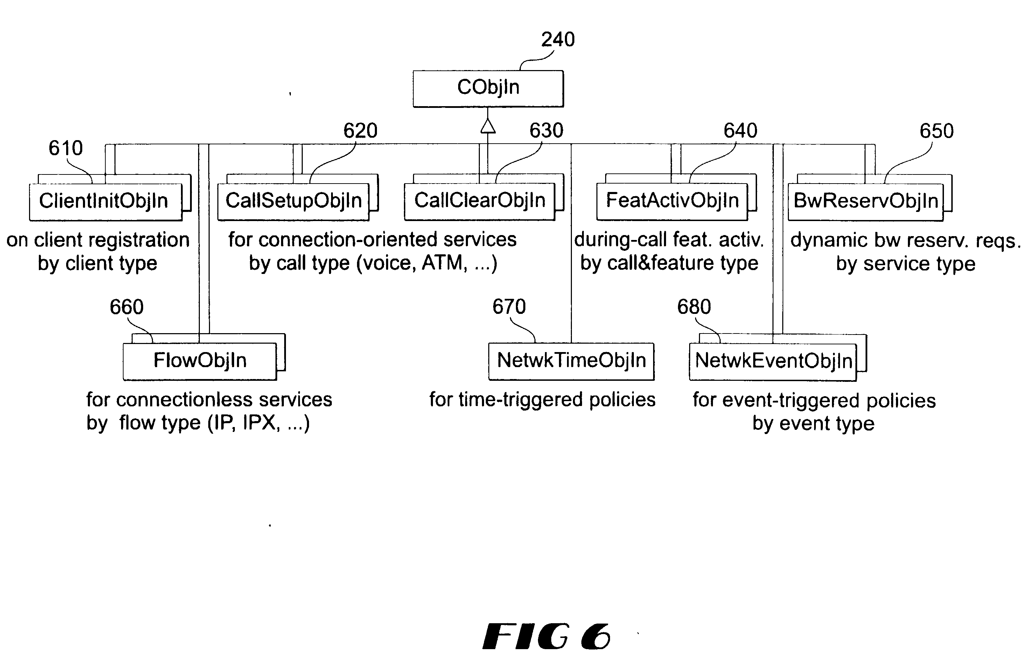

Policy objects CObjIn 240 and CObjOut 250 are assembled as directed by current conditions in the form specified by CObjIn template 440 and CObjOut template 450 (in database 410) and are forwarded to be interpreted by hierarchical policy interpreter 314 of policy manager 310. CObjIn is the form of the name for a set of input objects (ClientInitObjIn, for example) as shown in Fig. 6. There is a corresponding set of output objects with names of the form CObjOut (ClientInitObjOut, for example) that are deemed to be implicit in Fig. 6. Policy objects CObjIn 240 and CObjOut 250 determine the entry point in the policy hierarchy for policy evaluation as will be explained below.

### CS/PM 300:

CS/PM 300 consists of several collaborating engines. They may or may not be collocated, and ideally are not collocated with the NE 200 although they may be, on a dedicated processor.

Each CS/PM 300 serves one NE 200, or several NE 200's grouped in a zone, depending on the CS/PM 300's capacity. Several CS/PM 300's can be interconnected as peers or organized into a hierarchy, for scaling.

A CS/PM 300 may contain one or more of the following logical engines:
: a policy management engine - envelope for the other engines
: one or more service engines
: one or more authentication engines
: a network topology engine : a network call-admission control and bandwidth administration engine
: a network status engine
: a network monitoring engine
: an accounting/statistics engine
: a peer protocol engine
: one or more utility engines
   (e.g. for network time, transaction timeouts, logging etc.)
These engines are not necessarily implemented as distinct entities (they may be combined). Also, one or more of these engines may be implemented externally, as collaborating servers.

A CS/PM 300 collaborates with policy agents of several NEs; it may collaborate with other components on the NEs as well (call control, SSFBs) if they are accessible remotely. A CS/PM 300 is supported by a distributed directory service; it can communicate with at least one of Directory Servers 400.

The engines comprising a CS/PM 300 will now be described:

### Policy management engine 310:

Policy engine 310 provides the top-level, policy-driven server functionality. Policy engine 310 integrates the "partial" call server functions provided by the other engines. Policy engine 310 determines, from device/service profiles 430 in the directory 410, the capabilities of the NE 200's and of the collaborating servers, and the protocols required for communication with them.

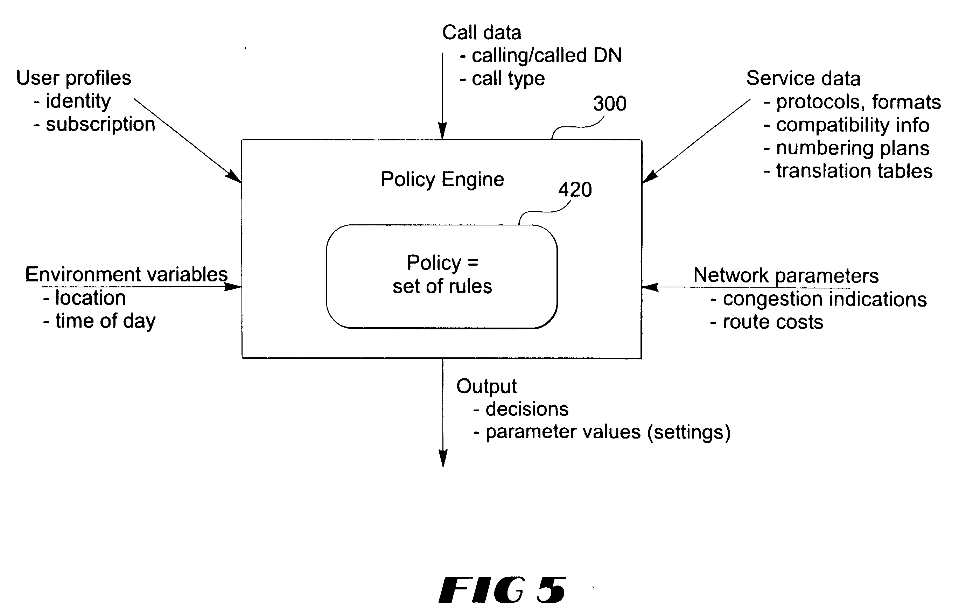

Policy engine 310 fetches all applicable policies 420 from the directory 410, and organizes them into a hierarchy 312, usable for run-time evaluation. It also keeps track of policy updates in the directory 410. Policy engine 310 Further breaks down decision requests from clients on NE 200's, for which it determines which policies need to be evaluated. Policy engine 310 contains a policy interpreter 314 suitable for evaluating policies according to their specific representation (format). An overview is shown in Fig. 5.

Policy engine 310 uses the other engines to make qualified decisions; in particular, it has mechanisms to implement policy primitives for:
: fetching policy input parameters (from clients on NEs)
: supplying policy output parameters (to clients on NEs)
: retrieving (from collaborating engines) data and partial decisions required during policy evaluation
: performing side-effect actions, e.g. updating other engines data

Policy engine 310 is also responsible for evaluating startup policies and periodic and other time-based policies, which may cause unsolicited policy decisions to be sent to the clients.

### Service engine 320:

Service engine 320 is a call server providing functionality required for a call/service to be completed, assuming the call/service is possible and allowed. Service engine 320 complements the functionality of the CC engine 220 in the NE 200, especially for functions suitable to be provided in a centralized manner. It provides such things as address translation or service-specific parameter values.

### Authentication engine 340:

Authentication engine 340 is a call server providing authentication functions based on user profiles 430 stored in the directory 410. Depending on the service, a user can be an organization/person or a node inside/outside the network. In some instances, authentication engine 340 may only be an interface to legacy authentication servers. Authentication engine 340 implements the required protocols over secure connections

### Network topology engine 335:

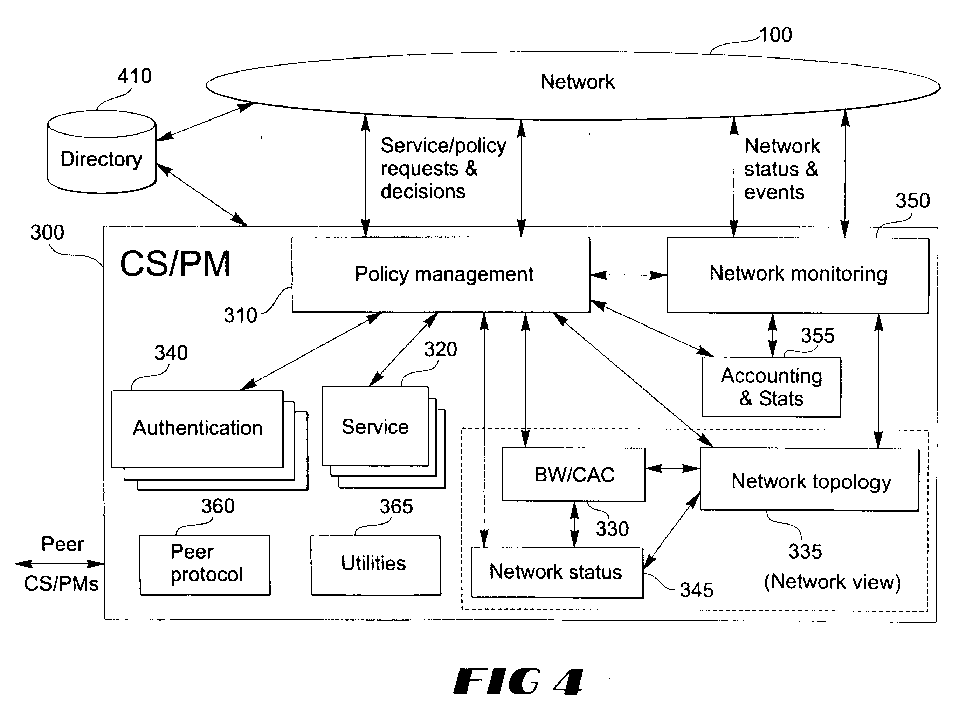

Further detail of the engines comprising CS/PM 300 is shown in Fig. 4.

The topology engine 335 complements the routing engine 270 on the NE 200's in making routing decisions for which a global network view is required (a view unavailable to the NE 200). Topology engine 335 manages summarized network topology information required for these decisions, and also maintains reachability information for neighboring networks, and maintains information on the location of other global network services (e.g., voice SCPs, gateways).

### CAC/BW engine (330):

The Call Admission Control/Bandwidth (CAC/BW) engine 330 complements the routing engine 270 in the NE 200's in making BW allocation and CAC decisions for which a global network view or higher authorization than that possessed by the NE 200 is required (e.g. for large bandwidth requirements). CAC/BW engine 330 further manages summarized network topology information required for these decisions.

### Network status engine 345:

The network status engine 345 manages global network status information such as congestion, general availability, and status of important gateways. This information is obtained from interpreting dynamic network data provided by the topology engine 335. The network status engine 345 uses this information to assist the other engines in their decisions/functions.

### Network monitoring engine 350:

The network monitoring engine 350 has the general function of determining essential network information at selected points (e.g. summarized topology and costs, BW availability information, congestion status). Network monitoring engine 350 assists the other engines that require such dynamic data regarding the network.

### Accounting and statistics engine 355:

The accounting and statistics engine 355 provides support for implementing accounting policies, and provides accounting support for services (e.g. credit-card billing for data calls).

### Peer protocol engine 360:

The peer protocol engine 360 handles the protocol required for a CS/PM 300 to communicate with peer CS/PM 300's. Peer protocol engine 360 is also used by several other engines to make RPC (remote procedure calls) to other CS/PM 300's whenever the information required resides in another zone (under the authority of another CS/PM 300). For example, a calling user profile or source address may be local, while a called user profile or destination address may be in another zone.

### Utilities engine 365:

The utilities engine 365 is a general-purpose support engine for system functions such as providing the network time to the other engines, supporting registration for timeouts, sending transaction timeout notifications to other engines, system logging, alarms etc.

### CS/PM's USES OF DIRECTORY and DIRECTORY SCHEMA:

Reference should be had again to Fig. 3. Directory 410 is a distributed directory, managed by directory servers 400 which exist on a plurality of nodes. Each CS/PM 300 has a connection to at least one directory server 400. Each NE 200 also has access to a directory server 400, possibly proxied by the CS/PM 300.

The DB interface may be a protocol such as the conventional DAP, LDAP, SQL, etc. Access from the NE 200's can be IP, FR, ATM, etc. Schema may be DEN-based, in which case there is the benefit of some standard object and attribute names.

There follows an explanation of some directory details relevant to policy evaluation. (Some service-specific aspects not relevant to policy evaluation will not be detailed.)

### User profiles (in profiles 430):

User profiles can apply to an individual user, a group, an organizational unit etc. A user profile serves as a placeholder for identification/authentication data and for data on services the user subscribed to. The user profile can be retrieved by keys such as service-specific user addresses (e.g. voice "directory number" (DN) or IP host address).

### Device (NE, CS/PM, ...) profiles (in profiles 430):

A device profile serves as a placeholder for configuration data. It can be retrieved by each device based on keys such as the device's network address (IP, ATM, ...).

### Service/capability profiles (in profiles 430):

The service/capability profiles contain global service /capability configuration data and options. They are retrieved by the appropriate engines/agents using the service/capability type as a key.

### Service end-point profiles (in profiles 430):

The service end-point profiles contain service-instance configuration data for end-points on specific devices (e.g. on specific NEs). An end-point can correspond, for example, to a physical port on which a service is offered. These include service end-points for the CS/PM service, thus describing the connections between the CS/PM and the NEs.

The device, service, service end-point profiles etc. can be structured in a complex way and have various associations between them. This, however, is dependent on the implementation of each specific service/capability, and is not essential to the invention, since the CS/PM 300 has knowledge of the schema and can retrieve the objects based on their types and on keys (attribute values).

### Protocol profiles (in profiles 430):

The protocol profiles specify which protocols are to be used between the various communicating components. Particularly, the protocol profiles specify what protocol is to be used between each NE 200 and the CS/PM 300. The protocol profiles also specify how to map the policy request/reply parameters (described by the policy parameter lists below) into messages in the specified protocol. This can range from a simple mapping (e.g., policy parameter list mapping to a specific offset in a specific message component) to complex mappings (e.g. in the case where the NE settings need to be done with SNMP messages rather than through the CS/PM-agent protocol).

### Policies 420:

Policies are sets of rules which are evaluated during operation and which are responsive to the occurrence of certain events. Each event type may require a decision, which is determined by the CS/PM 300. The decision results in actions taken by one or more NE 200's. These actions may include loading decision-making components locally on the NE 200, so that the NE 200 can make some subset of decisions by itself (e.g., load a filter that will let only certain traffic go through, or handle certain traffic in a special way).

Responsive to some events, the NE 200 solicits decisions from the CS/PM 300. Responsive to others, the CS/PM 300 sends unsolicited decisions to the NE 200 (which may not otherwise be aware of the event).

According to the present invention, the following event types are identified and supported:
Client NE initialization; whenever an NE becomes operational, it needs to be loaded with initial policy decisions, e.g. quasi-permanent decisions, in effect until the CS/PM notifies otherwise.
Data flow event; whenever a decision is required for a connectionless data flow (e.g. IP flow). This may occur on detection of a packet of the flow, but also prior to any packet of that flow being sent.
Call set-up event; whenever a decision is required for an NE that has received a (connection-oriented) call set-up request (e.g. a voice call, or an ATM connection).
Call clear event; similarly, on the corresponding call clear request.
Feature activation event; occurs during a call, when the call needs a change in its resources, e.g. because the user requests a feature activation.
Bandwidth reservation events; whenever there is a need to reserve bandwidth, which may be on a flow/call but which may also occur ahead of a flow/call.
Network time events; these are periodic events or scheduled events, which are signaled by timers or network time modules (e.g. from within the Utilities engine).
Network events; other events, such as major topology changes or congestion. Signaled by the appropriate CS/PM engine.

For each of the above event types, there is a corresponding policy type, as follows:
Client initialization policy; this is evaluated when a client NE registers with the CS/PM.
Data flow policy; decides how to handle a connectionless flow.
Call set-up policy; decides if the call is accepted, what resources to grant etc.
Call clear policy; may specify clean-up decisions.
Feature activation policy; decides whether to activate the feature and how to provide it.
Bandwidth reservation policy; decides if, where, how much etc. bandwidth to reserve.
Network time policies: policies which can change settings/decisions periodically, on a time-of-day basis, or at scheduled times.
Network event policies; policies triggered by other network events, which may result in unsolicited decisions sent to clients.
Each of the above policy types can be further sub-classified depending on the client type, or on the service type, etc. A particular implementation may handle only a subset of the above events/policy types.

Each of the above policy types constitutes an entry-point for the policy interpreter 314 contained in policy manager 310. In other words, in response to an event the interpreter determines the event type; a policy of the corresponding type is found, which is the root policy for that event (other policies can be situated hierarchically below it); and policy evaluation starts with this root policy (the entry point).

The policies can be further classified in several modes, such as:
by the services to which they apply;
by the users/user groups to which they apply;
by their period of validity, etc.
These are expressed by attributes of the policy objects stored in the directory. In addition, policies may also have relationships/dependencies between them. From all these, the CS/PM builds a hierarchy of policies suitable for evaluation on any of the above-listed events. The root policies are at the top of the policy hierarchy.

An essential part of every policy object is the "evaluation rules" section. This contains the logic which is interpreted when making decisions. It has the flexibility of a general-purpose programming language, including:
local variables declarations and control statements (if-then-else, ...);
sub-function calls for being able to nest policies (evaluate other policies from within a policy);
appropriate language "primitives" for referencing/accessing directory data and calling functions provided by the various CS/PM engines.
The policy logic may be stored in the directory in several forms:
as scripts in a suitable language e.g. Java, UnixShell/TCL etc.;
as finite state machines with states and condition/action-based transitions; these may be designed using a graphic tool and stored in some internal format (e.g. linearized trees), but when read by the CS/PM, they need to be "interpretable" units;
as sub-programs in a rule-based language like Prolog, etc.

In order for these subprograms to function like plug-ins, the interactions between them and the environment need to be specified. Therefore, for each of the policy types listed above, appropriate policy parameter objects are defined. The input parameter objects are supplied by the event (e.g. if the event is a policy decision request for a new call, the request from the NE contains all the information required to fill CallSetupObjIn (Fig. 6)). The output parameter objects are supplied by the policy interpreter 314 (e.g. the reply to the NE contains information from CallSetupObjOut (implicit in Fig. 6)).

### Policy parameter objects (lists of parameter names and types):

The parameter lists are descriptions of the "formal parameters" required for policy evaluation. They contain both input and output parameters; for all of them, concrete values will be supplied on each policy evaluation request by "actual parameter" lists. The actual parameters lists are objects attached to the triggering events (e.g., CallSetupObjIn above).

There is at least one policy input-parameter list and at least one policy output-parameter list for each of the policy types listed above, as shown in Fig. 6. In Fig 6 are shown the types of objects that may be used as CObjIn (240 in Fig. 3), thus determining the entry point to policy hierarchy 312 of Fig. 3. A corresponding set of objects is used as CObjOut (250 in Fig. 3).

These objects enable "plug-in policies". They also enable the development of device-independent policies: the device-specific mapping of these parameters into messages to NEs is given by the corresponding protocol profiles as explained above.

### OPERATION OF POLICIES

The following describes the process of policy evaluation. This is done by the policy interpreter 314, a component of the policy engine 310. As mentioned above, policies may be scripts, state-machines, subprograms evaluable by a rule-based system etc. The present discussion assumes policies to be scripts in a language, but it should be understood that this is not a limitation (the same functionality can be achieved with state-machines or other proprietary implementation).

With reference to element 420 in Figs. 3 and 5, a policy is a set of rules which are evaluated to make a qualified decision for a service. Referring to the definitions given above of the service-specific part and the policy part of a service/capability, the delimitation of where policies end and where the actual service begins is somewhat ephemeral. At the limit, since everything is expressed in terms of rules, it is a semantic distinction whether everything could be considered policy, or service. But separating these two aspects and placing the policy part as a flexible, easy to modify layer on top of the service layer has the benefit of creating a configurable system, which can provide new services just by combining additional sets of rules (policies) on top of the primitives offered by a more rigid framework (the service).

The policy objects consist of a static part , which is the "code" of a script or the "states/transitions table" of a state-machine implementing the aforementioned rules. This part is complemented by a dynamic part, consisting of the variable, contextual data at the time of evaluation. In other words, the dynamic part is the set of parameters and other time-variant data used during policy evaluation but not stored as part of the policy code.

The dynamic data required to evaluate a policy object is categorized as follows:
1) Call/flow data, including but not limited to:
   the call type (voice, fax, ...) for connection-oriented (CO), or the packet type (protocol, encapsulation, ...) for connectionless (CL)
   call/flow identification number
   the source and destination network address/subaddress, e.g. directory number, ATM address or IP address and port
   originating/terminating party identification and parameters such as password, in the case where these parties are not statically associated with the call/packet source/destination network addresses, e.g. in the case where user nomadicity is supported
   call/packet priority and/or other dynamic parameters already assigned to the call/packet by the NE (these may be viewed as the result of the application of local policies by the NE).
   call/packet attributes as signaled to the NE by the originating party upon call set-up or as indicated by flags set by the originator in the CL packets, for example whether the call is reroutable, whether a fault-tolerant connection is required etc. This includes all the things that the originator may request from the network by initial signaling.
   additional call/packet attributes signaled to the NE by the originating party after call set-up (while the call is in progress) or in subsequent flow packets. This covers attributes which describe during-call feature activations or flow parameter changes like dynamic bandwidth requests.
   call termination indication of flow blocking indication, including relevant parameters such as cause or accounting-related data.
2) Service-specific (context) data. This data is stored in the directory in device/service profiles. The policy logic may perform correlation of such data from more profiles and from more end-points. This data consists of:
   service end-point identification, service type and features/capabilities supported (in case some are optional/not implemented)
   parameters required by the service (or one of its features) in order to complete, for example protocols, formats and compatibility info
   translation tables for various numbering plans or addressing schemata
   additional translations or address resolution required for special features, e.g. joining a broadcast/conference call identified by a (network) global multicast call/flow number.
3) End-users (call/flow originator and/or terminator) identification. These are user profiles containing:
   method to authenticate the originating and/or terminating party, including the authentication service and protocol
   user-specific subscription data, e.g. permissions and features he subscribed to (for which he pays)
   service attributes related to specific locations from where the user may call/transmit.
4) Global network data, such as:
   topology data, ideally detailed for the one zone the CS/PM is in charge of and summarized for the rest of the network. This is required whenever a policy decision needs to be communicated to more than one node. For example in the case where the CS/PM needs to do bandwidth reservation by itself (rather than rely on an NE-signaled protocol like RSVP which may not be available)
   network-related traffic costs (summarized), e.g. the costs of going over voice and data subnetworks, to select/optimize routes based on cost
   network location and availability of global resources/services such as gateways,
   network/subnetworks congestion status
   subnetworks or critical links bandwidth availability, also useful in route selection
5) Environment data, such as:
   current time-of-day
   occurrence time for scheduled events
   run-time system data (for the CS/PM itself), e.g. if it's running in debug mode, to test new policies; or whether the CS/PM system itself is congested, in which case additional policies may be triggered.

In order for the policy interpreter 314 to be able to "plug-in" such policy objects, it is necessary for it to receive and have access to all the above types of dynamic policy data (parameters). Failure to do so results in the policy interpretation being less flexible or not working at all. Therefore, the policy interpreter 314 of policy manager 310 has the following capabilities to receive/access this data:

### a) Call/flow data.

This data is made available to the policy interpreter 314 of policy manager 310 by the CS/PM agent 260 in the policy request messages. The mapping of this data to one of several types of CObjIn objects 240, as well as the templates of the various CObjIn objects 440 (with attribute names and types) are stored in the directory 410. as explained above. Thus, the policy interpreter 314 works on "known" data types and policies are independent of the various NE 200 types and communication protocols.

At the limit, the CS/PM agent 260 on the NE 200 may send to the CS/PM 300 the whole call request block (set-up, clear, feature activation, etc.) as signaled by the end user, or the whole data packet as received from the user (e.g. the first packet in a flow). This requires more functionality in the service-specific engine, but still the information received is described by the appropriate CObjIn template 440. b) Service-specific data.

This data is made available to the policy interpreter 314 of policy manager 310 by the CS/PM agent 260 in client registration requests. The mapping of this data to ClientInitObjIn objects 610 (Fig. 6), as well as the templates of the ClientInitObjIn objects (with attribute names and types) are stored in the directory 410, as explained above.

Alternatively, the ClientInitObjIn 610 contains minimal service end-point identification data which allow the CS/PM 300 to retrieve the appropriate device/service profiles from the directory the same way as the client did it upon its initialization.
Service-specific engines organize this data per client into internal data structures in a manner dependent on the service. Storing and retrieving this data into the service-specific engines (as well as deleting it when the client terminates) is done by the policy interpreter 314 of policy manager 310 by calling policy-language primitives. These primitives are "natives", implemented by the service-specific engines which provide "published interfaces" for them. The definitions of these interfaces are included by the policies which make use of them (similarly to "include files" in general-purpose programming languages).

### c) End-user identification.

This data is provided to the policy interpreter 314 of policy manager 310 by both the service and the security/authentication engine. For example, the service engine provides the user name and/or location based on the source/destination address, while the security/authentication engine 340 provides the user profile from stored profiles 430 based on the user name or location, including the method and means to authenticate the user. Policies (via the policy interpreter 314 of policy manager 310) make use of this functionality by calling native language-primitives of the two engines, similarly to b) above. Templates for user profiles are stored in the directory 410.

### d) Global network data.

This data is provided to the policy interpreter 314 of policy manager 310 by the complex of three engines, the network topology engine 335, the BW/CAC engine 330, and the network status engine 345. These have a published interface to access at least the data described under 4, above. Through this interface, policies obtain individual data or collections of data (e.g. lists of nodes or subnetworks) whenever required by the policy logic.

### e) Environment data.

The Utilities engine 365 provides the appropriate primitives to get the items described in 5) above. Policies can make explicit requests to get them. Also, for unsolicited events (e.g. occurrence of scheduled event), the policy interpreter 314 of policy manager 310 receives a notification from the Utilities engine 365 and the parameters are contained in the NetwkTimeObjIn 670 or NetwkEventObjIn 680; their templates are also stored in directory 410.

As a result of policy evaluation, the decisions and their parameters are stored in one of the CObjOut objects 250. The Policy interpreter 314 of policy manager 310 has primitives to send a message (both in reply to a request and unsolicited) to one or more NE 200s. Upon this send operation, the Policy engine 310 makes use of the device and service profiles stored in profiles 430 and corresponding to the NE 200 and its associated CS/PM 300 in order to map the parameters in CObjOut 250 to specific parameters in the message, as specified by the protocol in use between the CS/PM 300 and the NE 200 or the agent 260.

The following illustrates the Policy interpreter 314's capabilities of operation using the directory templates and the primitives provided by the various engines. As an example, we consider a policy which needs to be evaluated in order to allow/disallow the activation of the Call Display feature for a voice call. For this example, we choose the following illustrative policy rules and assumptions:
this is the policy evaluated on the called party side;
the call set-up request always carries the calling party number;
the user profile of the called party specifies whether he subscribed to (pays for) the Call Display feature
the user profile of the calling party specifies whether he subscribed to the Call Display Blocking feature, which prevents his number from being displayed
the user profile of the called party specifies whether a privileged user (e.g. the Police, FBI, ...) can override Call Display Blocking, in which case the calling party cannot "hide" his number from the called party.

The Policy, written in a C-style policy language, is as follows:

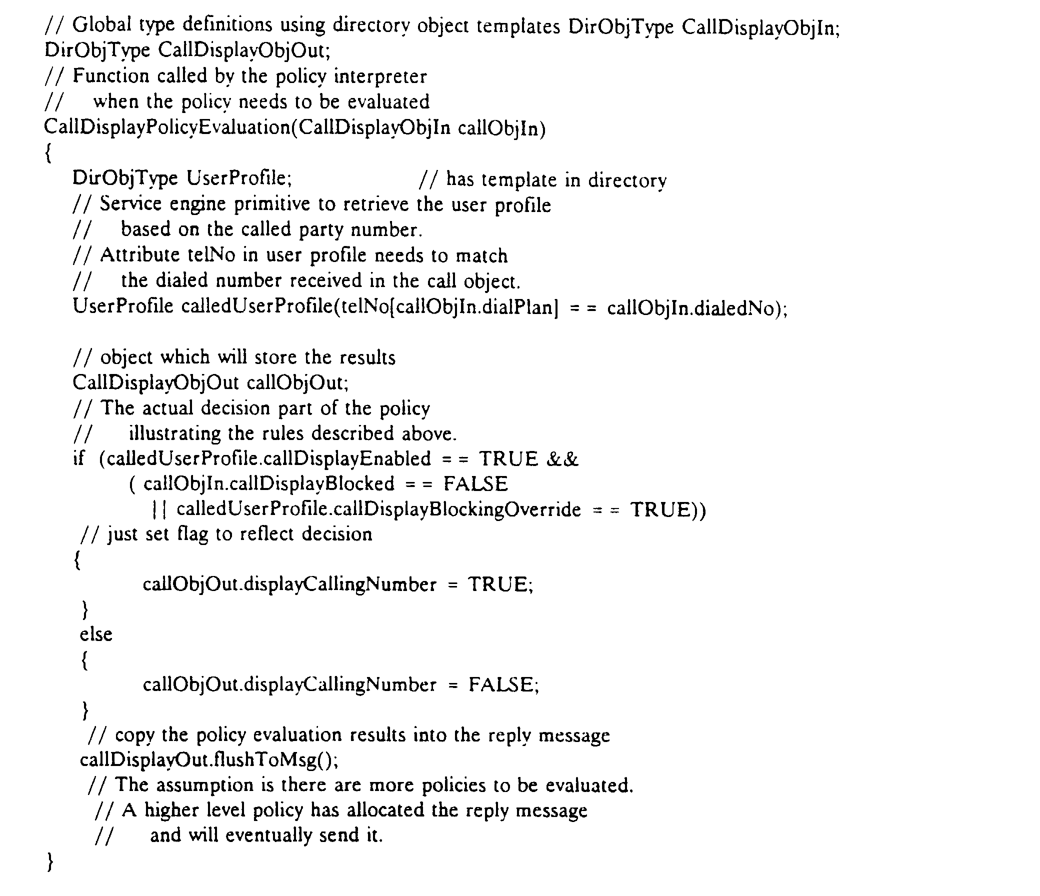

Additional rules defined for this capability can be implemented just by adding/modifying a few lines in the above script. By manipulating these rules, new features can be defined (for example, this is how Call Display Blocking Override was introduced from a previous version of the policy).

### Example Applications:

The following example applications of the present invention illustrate why a flexible policy engine according to the present invention, as well as the other supporting engines, are required in order to implement powerful policies for network services. These complex applications cannot be supported by a Policy interpreter based only on a simple list of conditions and actions. In addition, these conditions and actions still need to be connected to the environment, which is an open issue for all prior art.

### EXAMPLE 1) Policies used to validate subscriber options and/or to negotiate service parameters between the two end-points:

Subscriber options are contained in user profile objects and service parameters are contained in device/service profiles. These profiles 430 are stored in the directory 410. The calling and called parties/end-points may have different profiles. Correlation between these profiles may be necessary as follows:
to implement a simple "call display" feature, assuming, for example the following rules:
the called party profile 430 may contain the "call display enabled attribute" (for which the called party pays);
the calling party profile may contain the "call display blocking" attribute (for which the called party pays also);
the called party attribute may have a "call display blocking override" attribute, indicating that he is a privileged user, from which one cannot hide the calling number.

A corresponding policy would need to correlate these profiles to determine whether the calling party number is to be displayed or not at the destination end-point, in order to complete a "voice over data" call, where each of the two end-points supports a different set of possible methods (e.g. over IP, ATM, FR) and/or encodings (e.g. one or more of the G7xxx standards). These capabilities are described in device/service profiles 430. The call can only be processed if there is one method/encoding that both end-points support, or if the network can provide an appropriate interworking function. Furthermore, depending on the method/encoding chosen, there may be subsequent service parameters to be negotiated. A policy is required to contain the logic to evaluate all the possible combinations -- this could not be accomplished by a simple sequential list of conditions + actions.

An alternative to policy-based negotiation is negotiation by signaling. This has the disadvantage that it consumes network resources at all intermediate nodes (e.g. to maintain call state while the call is being set up). Resources are held even before the network can determine whether the call can and should proceed. Furthermore, signaling is reflected in protocols, which in turn are reflected in protocol stacks: i.e., hard-coded, inflexible implementations.

In addition, as the features evolve, upgrading one policy on a policy server is simpler than upgrading protocol stacks and other software components on all the NE 200s.

### EXAMPLE 2) Routing policies:

There is a lot of redundancy in today's networks. Also, providers often own parallel networks: e.g., a legacy voice network and one or more data networks (e.g. with IP, ATM, FR backbones).

Once in a particular network or subnetwork, routing is usually done by the network elements 200 themselves. However, prior to this, some major routing decisions may need to be taken. Some calls may need to be routed over specific networks or paths, for example redirecting all data traffic (Internet calls, facsimile, etc.) from voice networks to data network backbones. In other situations voice originating in data networks is redirected to voice networks.

The decision to redirect this traffic implies evaluating a combination of criteria such as:
What is the traffic type? voice, video, data, what kind of data?
The time of day; required e.g. to select cheaper alternatives for voice during non-discount hours.
Network status, e.g. whether there is congestion in some networks/subnetworks.
User info, e.g. if he paid for premium service, can consider some networks/paths, otherwise not.
Source/destination end-point capabilities, what are the supported services.

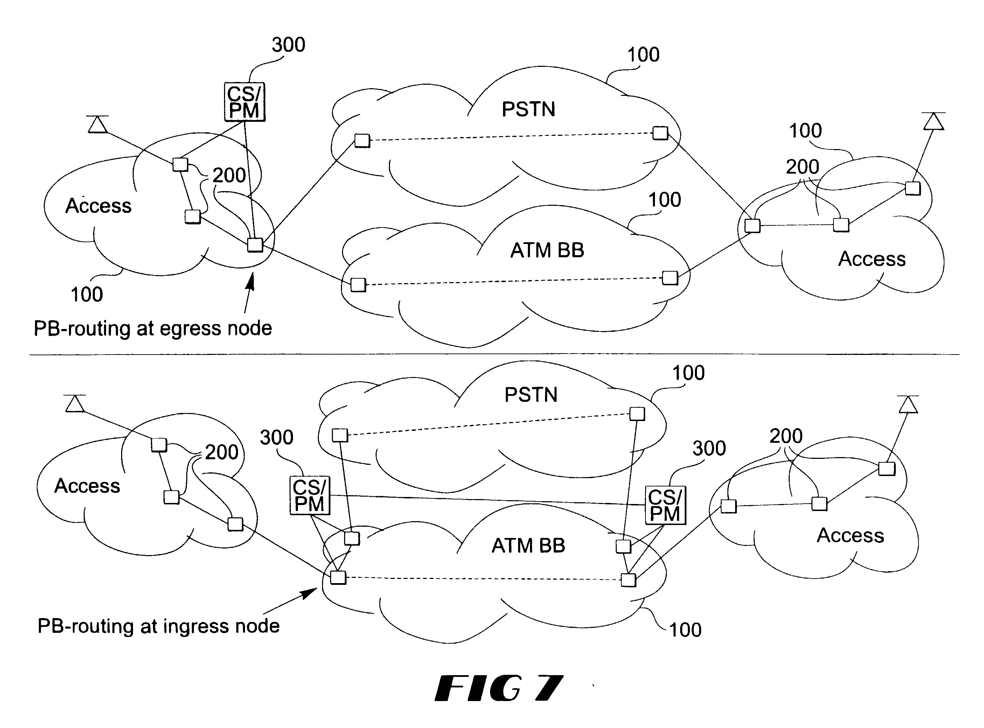

Proper evaluation of these factors requires a global network view and network policies. Therefore the matter is out of the competence of the NE's 200 and within the competence of the CS/PM 300. Some typical routing scenarios are depicted in Fig. 7.

Some differentiated routing exists today in a limited form. It usually consists of a "one-point switch" (divert all of a certain traffic type to a certain point). It is typically implemented by a dedicated SW component loaded on an NE 200 which doesn't have a global network view.

### EXAMPLE 3) Authentication and security policies:

Examples in this area also show how the logic expressed by a policy or a set of policies can be anything from a few simple tests to a more complex subprogram.

In the simplest case, a login server just needs to check whether a user has the right to open a session. This implies at least one authentication and a check of the user's privileges as specified by its profile, possibly cross-checking with some organizational and/or service profile.

Such a conventional authentication server usually has a fixed interface (protocol) with limited flexibility. Greater flexibility is required, for example, when:
there may be more authentication servers; the context of the service determines which one to query
subsequent requests made by the user during a session need to be evaluated for permissions; authentication and privileges to grant tend to be more service-specific in this case, resulting in a larger variety
there is a need to differentiate requests traffic type; different rules can apply to:
   voice; e.g. based on time of day and user profile, long-distance calls may not be allowed after a certain hour
   video; e.g. since this costs more, an additional password/access code/id is required to identify some department or project which will take over the charge
   data; e.g.
      ordinary data may need little authentication; an initialization policy may determine quasi-permanent rules to be downloaded/installed on the NEs to handle this kind of traffic with minimal overhead
      telex of any message with authenticity guarantees may need special certification + additional actions like encryption.
      financial transactions may be subject to organization-specific rules, for example in all transaction both the source and the destinations credit-card info need to be authenticated by a trusted third-party; this functionality (a security broker) could be offered by the network provider himself
   authentication/security may depend on the route taken. Some routes are more/less secure, some routes may not be allowed at all for certain users/traffic, or allowed only with special arrangements.

In the above examples, the role of the policy manager becomes apparent, as a wrapper of the authentication/security resources, providing additional functionality and flexibility at the top level (i.e. before calling the specific primitives offered by the resources). Policies are a place-holder for the top-level logic, and by making them configurable one can extend a more rigid core of authentication/security services to customizable services.

Authentication/security servers exist today, working in conjunction with gateways and firewalls. They lack integration: a user may have to authenticate several times in a row with different servers during the same session. The "wrapper" functionality that would coordinate between these is not implemented in configurable policies, but rather hard-coded separately in applications at different levels. Flexibility is limited to the attributes which can be specified in so-called "access control lists" (ACLs). The conventional solutions do not provide customizable logic.

### EXAMPLE 4) QoS (Quality of Service) policies:

In integrated voice-data networks, the following aspects generate QoS issues:
a lot more traffic types (as opposed to the single type, voice) with:
   a much wider range of bandwidth (BW) requirements;
   differentiated traffic based on urgency: real-time (voice, video) and non-real-time;
   differentiated traffic based on importance (e.g. control traffic more important than regular data)
the requirement to provide various service subscription options (regular, premium, gold) for different price offerings
the requirement to handle "orthogonal" traffic (virtual private networks (VPNs), i.e. more "logical" networks supported by one physical network. Impacts of one VPNs traffic on another and fairness are complex issues which can be addressed poorly from only the NE 200's point of view.

Having a large number of hybrid requirements, the QoS problem is best solved with a set of network-wide policies. Such a set inherently has complex logic. Some standards groups (e.g. diff-serv, int-serv in IETF) focus on small aspects of it, therefore progress is slow and solutions to come are uncertain even in their basic approach. This is one additional reason to provide a flexible policy manager.

Another is that as standards lag behind development needs, proprietary QoS solutions emerge. However, in order to guarantee end-to-end QoS, most of these proprietary solutions rely on the whole network being supplied by a single vendor, which is rarely the case. A policy provides the ideal mechanism for abstract (generic) policies, for their mapping to specific mechanisms in the NE 200s supplied by different vendors and for interworking.

It will thus be seen that the invention efficiently attains the objects set forth above, among those made apparent from the preceding description. In particular, the invention provides context-sensitive adaptive performance with easily modifiable performance characteristics.. Those skilled in the art will appreciate that the configurations depicted in Figures 3 and 4 allow convenient asynchronous modification of the policy tree and decoupled control of applications performed by network elements.

It will be understood that changes may be made in the above construction and in the foregoing sequences of operation without departing from the scope of the invention. It is accordingly intended that all matter contained in the above description or shown in the accompanying drawings be interpreted as illustrative rather than in a limiting sense.

It is also to be understood that the following claims are intended to cover all of the generic and specific features of the invention as described herein, and all statements of the scope of the invention which, as a matter of language, might be said to fall therebetween.

Having described the invention, what is claimed as new and secured by Letters Patent is:

## Claims

1. In a network comprising a plurality of user-callable network elements for receiving requests from users and forwarding user traffic;
at least one directory means in communication with said network elements and including a storage means for storing at least policy representations;
at least one call serving means in communication with said network elements and with said at least one directory means; said call serving means including:
receiving means for receiving, from a requesting network element, information describing user traffic or a user-originated request;
monitoring means for monitoring network conditions and events;
policy interpretation means for interpreting the request adaptively to network conditions and events according to hierarchical interactive policies specified by said policy representations; and
transmitting means for sending results of policy interpretation to a requesting network element in response to user requests or upon spontaneous request from said policy interpretation means.

2. The network recited in Claim 1 wherein network events include:
Client NE initialization event;
Data flow event, occurring when a decision is required for a connectionless traffic;
Call set-up event and call clearing event, occurring when a decision is required for connection-oriented traffic;
Feature activation event, occurring when a call or flow requires activation of a feature as requested by the user;
Bandwidth reservation event, occurring when a call or flow needs a change in its bandwidth reservation;
Network time events, which occur according to predetermined schedules or periodicity specifications; and
Network events, major topology changes or congestion or on other major status changes of said network as indicated by said network as indicated by said network monitoring means from other portions of the network.

3. The network recited in Claim 1 wherein each network element includes agent means located on said network element or in its proximity and which agent means is used for communicating with said call serving means in a uniform manner.
whereby details of network elements' internal operation and traffic related protocols are hidden from said call serving means.

4. The network recited in Claim 1 wherein:
each network element includes at least one control block means for storing at least one control block for retaining results of policy interpretation and for controlling operation of the network element according to said results, wherein each control block defines a logical interface including commands, parameters, and command protocol;
each network element includes agent means for communicating with said call serving means in a uniform manner; and
said logical interface is accessible to at least said agent means.

5. The network recited in Claim 4 wherein each control block is classified as one of:
traffic shaper;
traffic policer;
traffic queue manager;
traffic counter;
bandwidth manager;
flow aggregator/separator;
packet/flow interceptor;
packet classifier;
packet labeler;
packet filters, including encapsulation/decapsulation, translation/interworking, compression/decompression, and encryption/decryption;
voice or video stream encoder/decoder;
voice echo canceler;
voice silence suppressor;
digital signal processing unit;
physical interface signaling controller; and
physical interface tester.

6. The network recited in Claim 4 wherein:
said storage means further stores device and service profiles for specifying said commands, parameters, and protocol; and
said agent means and said call server means include compilation means to determine said logical interface from said profiles.

7. The network recited in Claim 1 wherein:
said call server means includes means for retrieving said policy representations from said storage means and compiling them into said policy hierarchy based on policy attributes stored as part of said policy representations.

8. The network recited in Claim 7 wherein said policy hierarchy contains at its top level at least:
Client initialization policy, evaluated when a network element registers with said call serving means;
Data flow policy, evaluated for determining handling of a connectionless flow;
Call set-up policy and call clear policy, for determining according to current network events and conditions whether a connection-oriented call request may be accepted and what resources it is granted;
Feature activation policy, for determining whether a user-requested feature is to be provided;
Bandwidth reservation policy, evaluated to determine how much dynamic bandwidth is to be reserved for a call or flow;
Network time policies evaluated periodically or at scheduled times; and
Network event policies evaluated on triggering of other network events.

9. The network recited in Claim 7 wherein retrieval and compilation of said policy representations occurs upon initialization of said call server means.

10. The network recited in Claim 7 wherein said policy representations can selectively be stored, deleted, and modified in said storage means, and wherein retrieval and recompilation of said policy representations and reconstruction of said policy hierarchy occur upon policy change notification from said directory means to said call server means.

11. The network recited in Claim 7 wherein some of said policies are able to selectively call other of said policies.

12. The network recited in Claim 1 wherein:
said storage means further stores protocol profiles for specifying message formats and communication protocols for communicating among portions of the network; and
said call server means includes means for retrieving said protocol profiles and determining therefrom message formats and communication protocols to be used in communicating between said call server means and other portions of the network including said user-callable network elements.

13. The network recited in Claim 1 wherein said policy interpretation means includes means to retrieve and process from said policy representations at least:
policy logic including control instructions and logical variables, whereby execution of a path in the policy logic evaluates a policy according to a said policy representation;
first primitives for enabling policies to invoke evaluation of other policies; and
second primitives for enabling said policy interpretation means to obtain context data during policy evaluation.

14. The network recited in Claim 12, wherein said context data includes:
description of a service to which a current request or user traffic applies;
description of a current request or user traffic;
attributes of a current user;
description of network elements providing a current service;
description of current network status; and
environment parameters including without limitation network date and network time.

15. The network recited in Claim 1 wherein said information describing user traffic or a user-originated request comprises a policy object block having a block-type identifier identifying type of traffic or request and having parameter lists specifying characteristics of the traffic or request.

16. The network recited in Claim 15 wherein said block-type identifiers include:
client registration, containing an indication of client type;
call setup for connection-oriented services, containing an indication of call type;
call clear for connection-oriented services, containing an indication of call type;
feature activation, sent during a call and containing an indication of call type and feature type;
dynamic bandwidth reservation requests, containing an indication of service type;
flow requests for connectionless services, containing an indication of flow type;
network-time requests for requesting time-triggered polices; and
network-event requests for requesting event-triggered policies with an indication of a predetermined event type from a predetermined list of predetermined event types.

17. The network recited in Claim 15 wherein for a connection-oriented call said parameter lists include:
specification of call type;
a call identification number;
network address information for source and destination;
user identification of originating and terminating parties;
a user password if an originating party is not statically associated with a call source address or if a terminating party is not statically associated with a destination address;
parameters dynamically associated with said call by said network element, including without limitation call priority;
indications of call attributes signaled by the originating party, including without limitation traffic descriptors, service category, and indications of level of fault tolerance and reroutability;
call termination parameters including without limitation accounting information and an indication of termination cause.

18. The network recited in Claim 15 wherein for a connectionless flow said parameter lists include:
specification of packet type;
a flow identification number;
network address information for source and destination;
user identification of originating and terminating parties;
a user password if an originating party is not statically associated with a flow source address or if a terminating party is not statically associated with a destination address;
parameters dynamically associated with said flow by said network element, including without limitation flow priority;
indications of flow attributes signaled by the originating party, including without limitation flow class or quality of service;
flow statistics, including without limitation accounting information.

19. The network recited in Claim 3 wherein said results of policy interpretation comprises a policy object block having a block-type identifier identifying type of decision taken and having parameter lists specifying characteristics of traffic or request and parameters for subsequent actions to be performed on said network element by said agent means.

20. The network recited in Claim 19 wherein said block-type identifiers include:
client registration, containing an indication of client type;
call setup for connection-oriented services, containing an indication of call type;
call clear for connection-oriented services, containing an indication of call type;
feature activation, sent during a call and containing an indication of call type and feature type;
dynamic bandwidth reservation, containing an indication of service type;
flow type for connectionless services;
network-time indications associated with time-triggered polices; and
network-event indications associated with event-triggered policies.

21. The network recited in Claim 1 wherein:
said storage means stores device profiles for describing network said elements;
said storage means stores protocol profiles for describing communication protocol between said network elements and said call server means;
a network element passes information describing user traffic or a user originated request to the call server means in a first policy object block having a block-type identifier identifying type of traffic or request and having parameter lists specifying characteristics of traffic or request;
said call server means sends results of policy interpretation to a network element in a second policy object block having a block-type identifier identifying type of decision taken and having parameter lists specifying characteristics of traffic or request and parameters for subsequent actions to be performed on said network element; and
said call server means uses said device profiles and said protocol profiles for interpreting said first policy object blocks and for assembling said second policy object blocks.

22. In a network comprising a plurality of user-callable network elements for receiving requests from users and forwarding user traffic;
at least one directory in communication with said network elements and associated with a storage device for storing at least policy representations;
at least one call server network entity in communication with said network elements and with said at least one directory; said call server network entity including:
a receiver for receiving, from a requesting network element, information describing user traffic or a user-originated request;
a network monitor for monitoring network conditions and events;
policy interpretation logic for interpreting the request adaptively to network conditions and events according to hierarchical interactive policies specified by said policy representations; and
a transmitter for sending results of policy interpretation to a requesting network element in response to user requests or upon spontaneous request from said policy interpretation logic.

23. The network recited in Claim 22 wherein network events include:
Client NE initialization event;
Data flow event, occurring when a decision is required for a connectionless traffic;
Call set-up event and call clearing event, occurring when a decision is required for connection-oriented traffic;
Feature activation event, occurring when a call or flow requires activation of a feature as requested by the user;
Bandwidth reservation event, occurring when a call or flow needs a change in its bandwidth reservation;
Network time events, which occur according to predetermined schedules or periodicity specifications; and
Network events, major topology changes or congestion or on other major status changes of said network as indicated by said network as indicated by said network monitor from other portions of the network.

24. The network recited in Claim 22 wherein each network element includes an agent located on said network element or in its proximity and which agent is used for communicating with said call server network entity in a uniform manner,
whereby details of network elements' internal operation and traffic related protocols are hidden from said call server network entity.

25. The network recited in Claim 22 wherein:
each network element includes at least one control block for retaining results of policy interpretation and for controlling operation of the network element according to said results, wherein each control block defines a logical interface including commands, parameters, and command protocol;
each network element includes an agent for communicating with said call server network entity in a uniform manner; and
said logical interface is accessible to at least said agent.

26. The network recited in Claim 25 wherein each control block is classified as one of:
traffic shaper;
traffic policer;
traffic queue manager;
traffic counter;
bandwidth manager;
flow aggregator/separator;
packet/flow interceptor;
packet classifier;
packet labeler;
packet filters, including encapsulation/decapsulation, translation/interworking, compression/decompression, and encryption/decryption;
voice or video stream encoder/decoder;
voice echo canceler;
voice silence suppressor;
digital signal processing unit;
physical interface signaling controller; and
physical interface tester.

27. The network recited in Claim 25 wherein:
said storage device further stores device and service profiles for specifying said commands, parameters, and protocol; and
said agent and said call server network entity include compilation logic to determine said logical interface from said profiles.

28. The network recited in Claim 22 wherein:
said call server network entity is adapted to retrieve said policy representations from said storage device and to compile them into said policy hierarchy based on policy attributes stored as part of said policy representations.

29. The network recited in Claim 28 wherein said policy hierarchy contains at its top level at least:
Client initialization policy, evaluated when a network element registers with said call server network entity;
Data flow policy, evaluated for determining handling of a connectionless flow;
Call set-up policy and call clear policy,, for determining according to current network events and conditions whether a connection-oriented call request may be accepted and what resources it is granted;
Feature activation policy, for determining whether a user-requested feature is to be provided;
Bandwidth reservation policy, evaluated to determine how much dynamic bandwidth is to be reserved for a call or flow;
Network time policies evaluated periodically or at scheduled times; and
Network event policies evaluated on triggering of other network events.

30. The network recited in Claim 28 wherein retrieval and compilation of said policy representations occurs upon initialization of said call server network entity.

31. The network recited in Claim 28 wherein said policy representations can selectively be stored, deleted, and modified in said storage device, and wherein retrieval and recompilation of said policy representations and reconstruction of said policy hierarchy occur upon policy change notification from said directory to said call server network entity.

32. The network recited in Claim 28 wherein some of said policies are able to selectively call other of said policies.

33. The network recited in Claim 22 wherein:
said storage device further stores protocol profiles for specifying message formats and communication protocols for communicating among portions of the network; and
said call server network entity is adapted to retrieve said protocol profiles and to determine therefrom message formats and communication protocols to be used in communicating between said call server network entity and other portions of the network including said user-callable network elements.

34. The network recited in Claim 22 wherein said policy interpretation logic is
adapted to retrieve and process from said policy representations at least: policy logic including control instructions and logical variables, whereby execution of a
path in the policy logic evaluates a policy according to a said policy representation; first primitives for enabling policies to invoke evaluation of other policies; and second primitives for enabling said policy interpretation logic to obtain context data
during policy evaluation.

35. The network recited in Claim 33, wherein said context data includes:
description of a service to which a current request or user traffic applies;
description of a current request or user traffic;
attributes of a current user;
description of network elements providing a current service;
description of current network status; and
environment parameters including without limitation network date and network time.

36. The network recited in Claim 22 wherein said information describing user traffic or a user-originated request comprises a policy object block having a block-type identifier identifying type of traffic or request and having parameter lists specifying characteristics of the traffic or request.

37. The network recited in Claim 36 wherein said block-type identifiers include:
client registration, containing an indication of client type;
call setup for connection-oriented services, containing an indication of call type;
call clear for connection-oriented services, containing an indication of call type;
feature activation, sent during a call and containing an indication of call type and feature type;
dynamic bandwidth reservation requests, containing an indication of service type;
flow requests for connectionless services, containing an indication of flow type;
network-time requests for requesting time-triggered polices; and
network-event requests for requesting event-triggered policies with an indication of a predetermined event type from a predetermined list of predetermined event types.

38. The network recited in Claim 36 wherein for a connection-oriented call said parameter lists include:
specification of call type;
a call identification number;
network address information for source and destination;
user identification of originating and terminating parties;
a user password if an originating party is not statically associated with a call source address or if a terminating party is not statically associated with a destination address;
parameters dynamically associated with said call by said network element, including without limitation call priority;
indications of call attributes signaled by the originating party, including without limitation traffic descriptors, service category, and indications of level of fault tolerance and reroutability;
call termination parameters including without limitation accounting information and an indication of termination cause.

39. The network recited in Claim 36 wherein for a connectionless flow said parameter lists include:
specification of packet type;
a flow identification number;
network address information for source and destination;
user identification of originating and terminating parties;
a user password if an originating party is not statically associated with a flow source address or if a terminating party is not statically associated with a destination address;
parameters dynamically associated with said flow by said network element, including without limitation flow priority;
indications of flow attributes signaled by the originating party, including without limitation flow class or quality of service;
flow statistics, including without limitation accounting information.

40. The network recited in Claim 24 wherein said results of policy interpretation comprises a policy object block having a block-type identifier identifying type of decision taken and having parameter lists specifying characteristics of traffic or request and parameters for subsequent actions to be performed on said network element by said agent.

41. The network recited in Claim 40 wherein said block-type identifiers include:
client registration, containing an indication of client type;
call setup for connection-oriented services, containing an indication of call type;
call clear for connection-oriented services, containing an indication of call type;
feature activation, sent during a call and containing an indication of call type and feature type;
dynamic bandwidth reservation, containing an indication of service type;
flow type for connectionless services;
network-time indications associated with time-triggered polices; and
network-event indications associated with event-triggered policies.

42. The network recited in Claim 22 wherein:
said storage device stores device profiles for describing network said elements;
said storage device stores protocol profiles for describing communication protocol between said network elements and said call server network entity;
a network element passes information describing user traffic or a user originated request to the call server network entity in a first policy object block having a block-type identifier identifying type of traffic or request and having parameter lists specifying characteristics of traffic or request;
said call server network entity sends results of policy interpretation to a network element in a second policy object block having a block-type identifier identifying type of decision taken and having parameter lists specifying characteristics of traffic or request and parameters for subsequent actions to be performed on said network element; and
said call server network entity uses said device profiles and said protocol profiles for interpreting said first policy object blocks and for assembling said second policy object blocks.

43. In a network comprising a plurality of user-callable network elements for receiving requests from users and forwarding results to users according to the requests:
at least one directory in communication with said network elements and associated with a storage device for storing at least policy representations;
at least one call server in communication with said network elements and with said at least one directory;
said call server including a policy management engine for retrieving and applying said policy representations to said requests from users.

44. The network recited in Claim 43 wherein the call server further includes at least one of the following engines in communication with at least the policy management engine:
a service engine for facilitating passing of calls and traffic flows among network entities;
an authentication engine for checking authenticity of users according to user profiles stored in said storage means;
a network topology engine for informing at least the service engine of topology of the network;
a call-admission control/bandwidth engine for making call or flow admission decisions and bandwidth allocations;
a network status engine for reflecting network status and conditions;
a network monitoring engine for obtaining a predetermined set of network information at predetermined network points;
an accounting and statistics engine for providing accounting and statistics services;
a peer protocol engine for communication between the call server and other call servers; and
a utilities engine for miscellaneous network functions including without limitation time-related functions.

45. The network recited in Claim 44, wherein engines which provide functions specific to a service provide published interfaces for accessing policy primitives for said functions. said interfaces including without limitation primitives to perform address translations between various user and network addresses for and between supported service types.

46. The network recited in Claim 44, wherein the policy management engine obtains information for identification of users by calling policy primitives in the service engine and the authentication engine.

47. The network recited in Claim 46, wherein the service engine is responsive to policy primitives to provide a user name and user location according to a combination of user address and network address for both originating and terminating parties.

48. The network recited in Claim 46, wherein the authentication engine is responsive to policy primitives to provide a user profile from said storage means according to one or both of user name and user location, and if required by a current service to authenticate the user according to a user-provided password.

49. The network recited in Claim 48 wherein said user profile includes without limitation:
specification of the authentication service and protocol for authenticating the user;
specification of services and features to which the user is entitled; and
specification of locations from which the user may call or transmit.

50. The network recited in Claim 44 wherein the complex of:
the network topology engine;
the call-admission control/bandwidth engine; and
the network status engine
has a published interface of policy primitives for accessing at least:
network topology information;
a summary of traffic costs for main routes or route groups in the network;
availabilities and network locations of global resources and services;
congestion status at various points in the network; and
bandwidth availability of various routes or route groups in the network.

51. The network recited in Claim 44 wherein the utilities engine provides a published interface of policy primitives for obtaining at least:
current time of day;
occurrence times for scheduled events;
current status of the call server.
